# EUROPEAN PATENT APPLICATION

(11) **EP 1 411 683 A2**
(43) Date of publication of application: **21.04.2004**
(21) Application number: 03023146.8
(22) Date of filing: 10.10.2003
(51) Int. Cl.: H04L 12/56

(54) **Data transmission rate regulating system, monitor and control apparatus of data transmission rate regulating and method corresponding**

(30) Priority: 16.10.2002 JP 2002301187
(71) Applicant: NEC CORPORATION, Tokyo (JP)
(72) Inventor: Yahagi, Masahiko, Minato-ku Tokyo (JP)
(74) Representative: Glawe. Delfs. Moll

(57) **Abstract**

A data transmission rate regulating system for regulating the data transmission rate to a plurality of user terminals connected to a communication network comprises a quantity monitor for recognizing the accumulated quantity of received data of a user terminal, and a rate controller for controlling the reception rate of received data of a user terminal on the basis of information obtained by the quantity monitor.

## Description

### BACKGROUND OF THE INVENTION

### 1. Field of the Invention

The present invention relates to a data transmission rate regulating system, a monitor and control apparatus of data transmission rate, and a data transmission rate regulating method to be used in the same, and more particularly to a real-time data transmission method using a packet network.

### 2. Description of the Related Art

In case of transmitting or distributing contents having a high demand for real-time transmission (for example, voice or TV telephone) to a user, methods using transmission infrastructures can be classified into 1) a "circuit switched type" bearer which uses a circuit switched network as the transmission infrastructure and securely keeps the maximum transmission rate of application data in a band of an end-to-end section from the beginning to the end of a call or session, 2) an "IP (Internet Protocol) switched type" real-time bearer which uses an IP network as the transmission infrastructure and assures the maximum speed of its application in "a certain quality in probability by means of QoS (Quality of Service)", and 3) a "best effort type" bearer which uses an IP network as the transmission infrastructure and varies the transmission rate of application data depending on the traffic volume of other users.

Among these bearers, bearer 1) has a problem in efficiency of using circuits but has an advantage of assuring a real-time transmission. Bearer 2) can improve the disadvantage of bearer 1) in efficiency of using circuits but has the possibility of making it impossible to assure its real-time transmission due to a temporary or lasting congestion. Bearer 3), which is not made to take the responsibility for non real-time transmission thanks to its attribute of "best effort", cannot assure its real-time transmission.

Hereupon, that the real-time transmission is not assured means that sound-transmission is interrupted in case of voice, or a frame is fixed or skipped in case of moving picture, and as a result a user comes to be dissatisfied with the quality of application.

The circuit switched bearer of 1) uses a bearer having its occupied band whose upper and lower limits are secured at a point of time when a call or session has been established for each user in order to realize the above-mentioned features. This is a method being used in a conventional telephone circuit network.

In this case, even in case that a certain user transmits no user information in a transmission band of respective circuits (for example, in a state of silence), a circuit is occupied and even if another user attempts to send new user information or user information being higher in rate, said other user cannot use a transmission band of transmission path assigned to said certain user.

Speaking of what problem this causes, in case of considering a case that in a state where multiple users are in conversation with each other, each user performs transmission at a time ratio of 1/3, performs reception (the other party performs transmission) at a time ratio of 1/3 and both parties are in silence at a time ratio of 1/3, there occurs a phenomenon that a speech path can be used substantially only at a time ratio of 1/3.

That is to say, there occurs a problem that the efficiency of using a communication path becomes 1/3. It is a matter of course that the advantage of making no delay even if each user performs transmission or reception at any time is important, but it is not possible to improve the efficiency of using circuits. In order to improve the efficiency of using circuits, in recent years an IP switched bearer has been used rather than a circuit switched bearer.

On the other hand, an IP switched bearer does not secure or determine a communication band for each user but allows each user to send information at a high speed according to the quantity of information to be transmitted of each user when an IP switched network is sufficient in transmission capacity, and on the other hand the IP bearer brings a problem that a user cannot perform transmission at a transmission rate desired by the user due to an event that each user needs to transmit data at a high speed at the same time or due to temporary or lasting congestion of a network, and in the worst case there occurs a period of time when no data transmission can be performed.

Even if such a phenomenon occurs, when user's application is such application as download or upload of a file, Web retrieval or the like having a comparatively little demand for real-time transmission, such a phenomenon does not bring so much problems and a user can put up with it as a temporary phenomenon.

However, when user's application is such application greatly needing a real-time transmission as voice communication, TV telephone or the like, a temporary delay in data transmission hinders user's grasping the content of conversation or suddenly changes a TV picture into another picture, and makes the quality of transmission unbearable to a user looking at and listening to it. Using a circuit switched bearer in order to surely solve these points brings a problem in efficiency of using circuits.

As a representative of a method of transmitting a real-time application by means of an IP switched bearer, there can be mentioned MPLS (Multi-Protocol Label Switching) and RSVP (Resource reservation Protocol).

The former method introduces the concept of connection in a circuit switched network into an IP network and enables an end-to-end resource allocation. And the latter method is a protocol for an application to dynamically reserve network resources between endpoints and is independent of a band allocation method or a routing method.

As a technique of transmitting voice data and the like in an IP network as described above, there has been proposed a method of transmitting voice data or the like in real time on the Internet or a LAN (Local Area Network).

Since MPLS of a conventional real-time data transmission method as described above determines in advance a data transmission path for each user, it can assure the minimum band as a real-time transmission characteristic for this real-time application and brings a high adaptability to a regular stream. However, in case of a stream which may vary in speed over time, MPLS brings a problem when users' peak speeds overlap each other.

On the other hand, in case of RSVP since resources to be allocated to a certain user's application use a transmission band at a point of time of initiating this application, it is difficult to assure an additional transmission rate in case of attempting to transmit contents at a transmission rate exceeding a transmission band (expected) at the time of initiating the application.

And the transmission rates of application data being received by a plurality of users can vary independently of one another over time, and, particularly, data, being subject to a data compression process has a high speed (high bit rate) or a low speed (low bit rate) over time, namely, varies in compression ratio. For example, in case of application data being voice, existence of voice makes a high bit rate and silence makes a low bit rate. And in case of moving picture, a high bit rate occurs due to necessity of sending many changed portions when many dynamic components appear and a low bit rate occurs when a still picture having few dynamic components appears.

As described above, differently from the average speed or the maximum speed of an application itself, it can occur that a bit rate varies over time in each application, and in case that a plurality of users receive such a variable speed application, it is ordinarily necessary for each user to report a circuit of the maximum speed (maximum bit rate) possessed by applications received by each user, and a system in which every user reports the maximum speed and the use of a circuit is not permitted if the maximum speed cannot be assured may reduce the efficiency of using circuits.

### SUMMARY OF THE INVENTION

An object of the present invention is to provide a data transmission rate regulating system solving the above-mentioned problems and making it possible for a user to securely receive data even'when the transmission rate of application data of a particular user is temporarily raised in a real-time application variable over time and a data transmission rate regulating method to be used for the same.

A data transmission rate regulating system according to the present invention is a data transmission rate regulating system for regulating a data transmission rate to a plurality of users connected to a communication network, said system comprising a quantity monitor for recognizing the accumulated quantity of data received by a user terminal, and a rate controller for controlling the reception rate of received data of the user terminal on the basis of information obtained by the quantity monitor.

A monitor and control apparatus of data transmission rate according to the present invention is a monitor and control apparatus of data transmission rate for regulating a data transmission rate to a plurality of user terminals connected to a communication network, said apparatus comprising a quantity monitor for recognizing the accumulated quantity of data received by a user terminal, and a rate controller for controlling the reception rate of data of the user terminal on the basis of information obtained by the quantity monitor.

A data transmission rate regulating method according to the present invention is a data transmission rate regulating method for regulating a data transmission rate to a plurality of user terminals connected to a communication network, said method comprising in said monitor and control apparatus a step of recognizing the accumulated quantity of data received by a user terminal and a step of controlling the reception rate of data of the user terminal on the basis of information obtained by the quantity monitor.

That is to say, a data transmission rate regulating system of the present invention provides a delay absorption buffer capable of accumulating received data over a period of time in each user terminal in the system having a plurality of user terminals connected by means of an IP (Internet Protocol) network, and has a function of grasping the accumulated quantity of received data currently held by each of a plurality of user terminals and a function of regulating the reception rate of received data.

And in a data transmission rate regulating system of the present invention, a monitor and control apparatus connected to an IP network has a function of recognizing the accumulated quantity of received data as described above by inquiring the accumulated quantity of received data as described above of a user terminal connected in the IP network in a certain range or on the basis of notification from a user terminal, and a function of controlling the reception rate of data of at least one of the plurality of user terminals on the basis of information obtained by the recognizing function.

In a data transmission rate regulating system of the present invention, when a user terminal has judged that the residual quantity of application data being currently received in a delay absorption buffer has become less or is expected to become less than a predetermined quantity, it notifies a monitor and control apparatus of this event; and said monitor and control apparatus responds to the notification from the user terminal and examines the accumulated quantity of received data of one or plural user terminals other than the user terminal which has notified said event on the basis of information received in advance from said one or more relevant user terminals or information received by newly inquiring the accumulated quantity of received data of said one or more relevant user terminals, and when the monitor and control apparatus judges that said one or more relevant user terminals each have a margin for the accumulated quantity of received data (each residual quantity is larger than a predetermined value), it instructs said one or more user terminals to temporarily stop receiving data which is going to be received or indicates time intervals at which the reception rate of received data is reduced to said user terminals, and instructs the user terminal which has notified the above event to increase the reception rate of received data.

In a data transmission rate regulating system of the present invention, one or more user terminals out of the above-mentioned plural user terminals are provided with a unit for notifying the limit quantity of a residual quantity in a delay absorption buffer, and the user terminal stores the limit quantity of a residual quantity in the delay absorption buffer included in the notified information, compares the limit quantity of a residual quantity with the residual quantity of the delay absorption buffer of its own terminal, and when the residual quantity in the delay absorption buffer has become less than the limit quantity, it notifies a monitor and control apparatus of this event. The limit quantity of a residual quantity of the delay absorption buffer is a value calculated in terms of time and the value can vary according to the application which a user terminal is currently executing.

According to the above-mentioned configuration, even in case that when performing a real-time application variable over time as described above, the residual quantity of received data of a user terminal connected to a conventional IP network is reduced and in performing application it has judged that the real-time operation of it cannot be kept, a data transmission rate regulating system of the present invention makes it possible to realize the real-time operation of application by enabling not only a user terminal itself to solve a problem but also other user terminals to aid in its own data transmission load.

Thanks to this, a data transmission rate regulating system of the present invention can ensure data reception of a particular user terminal even if the transmission rate of application data of the user terminal is temporarily increased.

### BRIEF DESCRIPTION OF THE DRAWINGS

The above and other objects, features and advantages of the present invention will become more apparent from the following detailed description when taken in conjunction with the accompanying drawings wherein:
Fig. 1 is a block diagram showing the configuration of a data transmission rate regulating system according to an embodiment of the present invention.
Fig. 2 is a diagram showing an example of signals transferred between the user terminals and the monitor and control apparatus of Fig. 1.
Fig. 3 is a flowchart showing the processing operation of the monitor and control apparatus of Fig. 1.
Fig. 4 is a block diagram showing the configuration of a data transmission rate regulating system according to another embodiment of the present invention.

### DETAILED DESCRIPTION OF PREFERRED EMBODIMENTS OF THE INVENTION

Prior to describing in detail the present invention, conventional arts are described for facilitating understanding of the present invention.

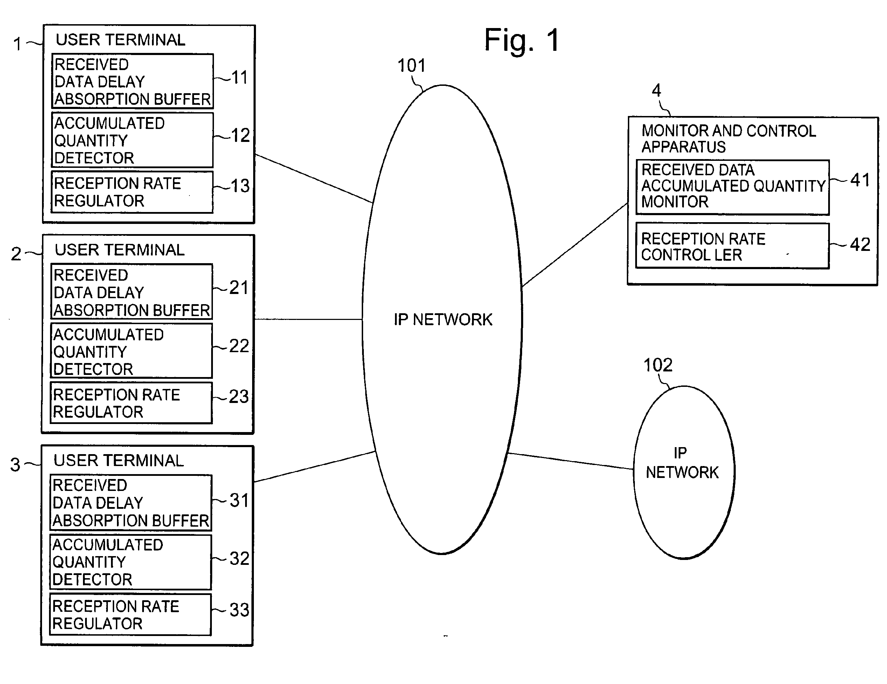

As a technique of transmitting voice data and the like in an IP network, there has been proposed a method or the like of transmitting voice data and the like in real time on the Internet or a LAN (Local Area Network), as disclosed in Japanese Patent Laid-Open Publication No.2000-295,286 (pp.3-4, Fig. 1) and Japanese Patent Laid-Open Publication No.2001-045,067 (pp.8-9, Fig. 1).

Since MPLS of a conventional real-time data transmission method as described above determines a data transmission path of each user in advance, it can assure the lowest band as a real-time transmission characteristic to this real-time application and brings a high adaptability to a steady-state stream. However, in case of a stream which may vary in speed over time, MPLS brings a problem when users' peak transmission rates overlap one another.

On the other hand, in case of RSVP since resources to be allocated to a certain user's application use a transmission band at a point of time of initiating this application, it is difficult to assure an additional transmission rate in case of attempting to transmit contents at a transmission rate exceeding a transmission band (expected) at the time of initiating the application.

And the transmission rates of application data being received by a plurality of users can vary independently of one another over time, and particularly data being subject to a data compression process has a high speed (high bit rate) or a low speed (low bit rate) over time, namely, varies in compression ratio. For example, in case of application data of voice, existence of voice makes a high bit rate and silence makes a low bit rate. And in case of moving picture, a high bit rate occurs due to necessity of sending many changed portions when many dynamic components appear and a low bit rate occurs when a still picture having few dynamic components appears.

As described above, differently from the average or the maximum transmission rate of an application itself, it can occur that the bit rate of each application varies over time, and in case that a plurality of users receive such a variable-speed application, it is ordinarily necessary for each user to report a transmission line of the maximum speed (maximum bit rate) possessed by applications received by each user, and a system in which every user reports the maximum speed and the use of a transmission line is not permitted if the maximum speed cannot be assured may reduce the efficiency of used transmission lines .

### (First Embodiment)

Next, an embodiment of the present invention is described with reference to the drawings. Fig. 1 is a block diagram showing the configuration of a data transmission rate regulating system according to an embodiment of the present invention. In Fig. 1, a data transmission rate regulating system according to an embodiment of the present invention is composed of user terminals 1 to 3 and a monitor and control apparatus 4 each being connected to an IP (Internet Protocol) network 101.

The user terminals 1 to 3 are connected to the IP network 101 and can receive data for performing application through the IP network 101. That is to say, user terminals 1 to 3 are respectively provided with received data delay absorption buffers 11, 21 and 31 capable of accumulating received data over a certain period of time, accumulated quantity detector 12, 22 and 32 for grasping the accumulated quantity of received data being currently accumulated by each of a plurality of user terminals, and reception rate regulator 13, 23 and 33 for regulating the reception rate of received data.

The monitor and control apparatus 4 is provided with a received data accumulated quantity monitor 41 for recognizing the accumulated quantity of received data as described above by inquiring the accumulated quantity of received data described above of the user terminals 1 to 3 connected to the IP network 101 in a certain range or through notification from the user terminals 1 to 3, and a reception rate controller 42 for controlling the reception rate of received data of at least one of the user terminals 1 to 3 on the basis of information obtained by the received data accumulated quantity monitor 41.

The IP network 101 is connected to an IP network 102, and data transmission and reception can be performed between the user terminals 1 to 3 and user terminals (not illustrated) other than these user terminals 1 to 3 or a server (not illustrated). Further, the IP network 101 has a monitor and control apparatus 4 connected with it and the monitor and control apparatus 4 controls data reception of the user terminals 1 to 3.

In a data transmission rate regulating system of the present invention, when a user terminal 1 has judged that the residual quantity of application data being currently received in a received data delay absorption buffer 11 has become less or is expected to become less than a predetermined quantity, it notifies the monitor and control apparatus 4 of this event.

The monitor and control apparatus 4 responds to the notification from the user terminal 1 and examines the accumulated quantities of received data of user terminals 2 and 3 other than the user terminal 1 which has notified the above-mentioned event on the basis of information received in advance from the relevant user terminals 2 and 3 or information received by newly inquiring the accumulated quantity of received data of the relevant user terminals 2 and 3, and when the monitor and control apparatus 4 judges that the user terminals 2 and 3 each have a margin for the accumulated quantity of received data (each residual quantity is larger than a predetermined value), it instructs the user terminals 2 and 3 to temporarily stop receiving data to be received, or indicates time intervals at which the reception rate of received data is reduced and instructs the user terminal 1 which has notified the above event to increase the reception rate of received data. Or by instructing other user terminals 2 and 3 to reduce the reception rate of data without instructing the user terminal 1 which has notified the above event to increase the reception rate of received data, as a result the monitor and control apparatus 4 may increase the reception rate of the user terminal 1 and wait for recovery of the accumulated quantity of received data.

Due to this, even in case that the residual quantity of received data of a user terminal connected to a conventional IP network 101 is reduced and in performing application it has judged that the real-time operation of the application cannot be kept, it is possible to realize the real-time operation of application by enabling not only a user terminal 1 itself to solve a problem but also other user terminals 2 and 3 to aid in its own data transmission load. Thanks to this, it is possible to ensure data reception of a particular user terminal even if the transmission rate of application data of the user terminal is temporarily increased.

Comparing data reception in the system of Fig.1 with data reception of user terminals connected to a conventional IP network, this system is different from a system using a conventional IP network on the points that this system is additionally provided with a monitor and control apparatus for monitoring and controlling the state of reception of application data in user terminals 1 to 3.

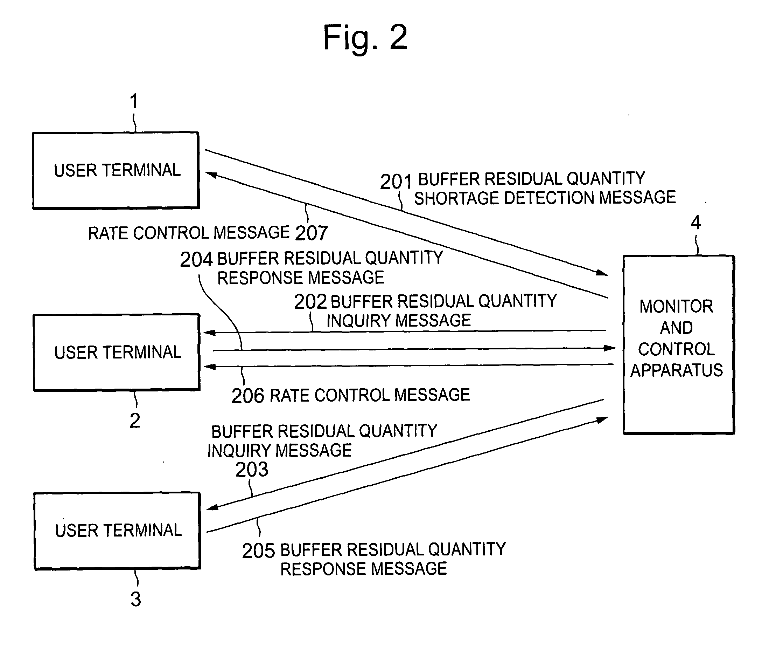

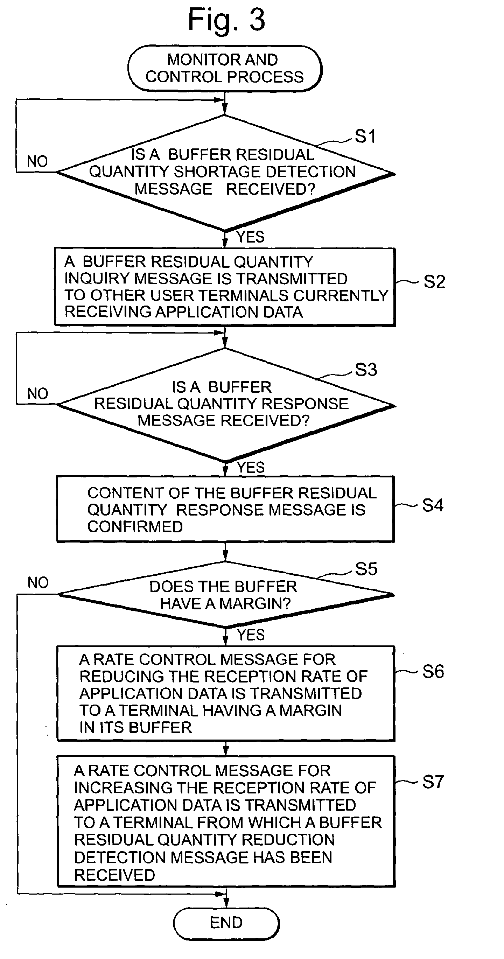

Fig. 2 is a diagram showing an example of signals transferred between the user terminals 1 to 3 and the monitor and control apparatus 4 of Fig. 1, and Fig. 3 is a flowchart showing the processing operation of the monitor and control apparatus 4 of Fig. 1. The operation of a data transmission rate regulating system according to the embodiment is described with reference to Fig. 1 to Fig. 3.

It is assumed that user terminal 1 confirms the content of a received data delay absorption buffer 11 during reception of data of a certain application and has recognized that the residual quantity in it is less than a predetermined value. At this time the user terminal 1 sends a received data delay absorption buffer residual quantity shortage detection message (hereinafter referred to as buffer residual quantity shortage detection message) 201 to the monitor and control apparatus 4 to notify of it that the residual quantity of received data in the received data delay absorption buffer 11 has become less than a threshold value. And the buffer residual quantity reduction detection message 201 to be sent from the user terminal 1 may be sent when the residual quantity of the buffer is expected to become less than a specified value in a predetermined time in terms of the reducing speed of the residual quantity of the buffer.

When the monitor and control apparatus 4 has received the buffer residual quantity shortage detection message 201 (step S1 in Fig. 3), it sends received data absorbing buffer residual quantity inquiry messages (hereinafter referred to as buffer residual quantity inquiry messages) 202 and 203 to other user terminals currently receiving application data, namely, user terminals 2 and 3, respectively (step S2 in Fig. 3).

When the user terminals 2 and 3 have respectively received the buffer residual quantity inquiry messages 202 and 203, they confirm the residual quantities of received data delay absorption buffers 21 and 31 of their own terminals and return received data delay absorption buffer residual quantity response messages (hereinafter referred to as buffer residual quantity response messages) 204 and 205 including the values of them to the monitor and control apparatus 4. At this time it is assumed that user terminal 2 has a margin for the residual quantity in.the received data delay absorption buffer 21 (its residual quantity is larger than a predetermined value) and user terminal 3 has no margin for the residual quantity in the received data delay absorption buffer 31 (its residual quantity is smaller than a predetermined value).

When the monitor and control apparatus 4 has received the buffer residual quantity response messages 204 and 205 from user terminals 2 and 3 (step S3 in Fig. 3), it confirms the contents of the received data delay absorption buffer residual quantity response messages 204 and 205 (step S4 in Fig. 3).

The monitor and control apparatus 4 examines information included in the buffer residual quantity response message 204 of user terminal 2 and information included in the buffer residual quantity response message 205 of user terminal 3, and recognizes that the received data delay absorption buffer 21 of user terminal 2 has a margin and the received data delay absorption buffer 31 of user terminal 3 has no margin. Due to this, the monitor and control apparatus 4 judges that it may reduce the reception rate of application data of user terminal 2 but must not reduce the reception rate of application data of user terminal 3.

Therefore, the monitor and control apparatus 4 sends a received data reception rate control message 206 for reducing the reception rate of received data to user terminal 2 (steps S5 and S6 in Fig. 3). Thereafter, the monitor and control apparatus 4 sends a received data reception rate control message 207 for increasing the reception rate of received data to user terminal 1 (step S7 in Fig. 3).

As described above, even when the residual quantity of received data of a user terminal connected to a conventional IP network is reduced and in performing application it has been judged that the real-time operation of the application cannot be kept, it is possible to realize the real-time operation of the application by enabling not only a user terminal itself to solve a problem but also other user terminals to aid in its own transmission load. Thanks to this, this embodiment can ensure data reception of a particular user terminal even if the transmission rate of application data of the user terminal is temporarily increased.

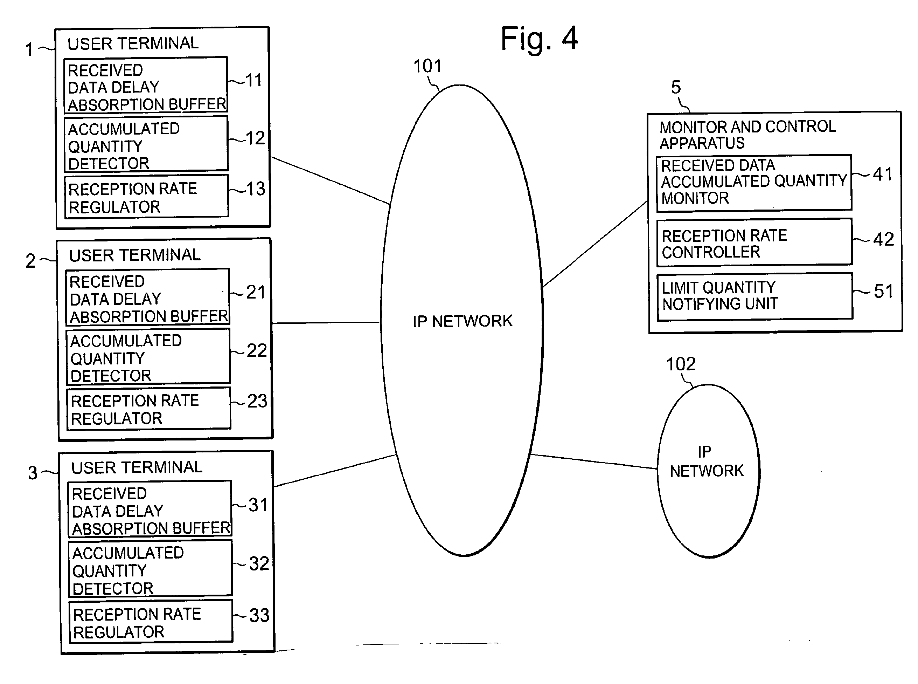

Fig. 4 is a block diagram showing the configuration of a data transmission rate regulating system according to another embodiment of the present invention. In Fig. 4, a data transmission rate regulating system according to another embodiment of the present invention has the same configuration as the data transmission rate regulating system according to the first embodiment of the present invention shown in Fig.1 except that it is provided with a monitor and control apparatus 5 comprising a limit quantity notifying unit 51 instead of the monitor and control apparatus 4, and the same components are given the same symbols. And the operation of the same component is the same as the first embodiment of the present invention.

The limit quantity notifying unit 51 notifies the above-described user terminals 1 to 3 of the limit quantities of residual quantities of the received data delay absorption buffers 11, 21 and 31. User terminals 1 to 3 store the limit quantities of residual quantities of the received data delay absorption buffers included in the notified information, compare the limit quantities of residual quantities with the residual quantities of the received data delay absorption buffers 11, 21 and 31 of their own terminals, and when the residual quantities of the received data delay absorption buffers 11, 21 and 31 are less than the limit quantities, they notify the monitor and control apparatus 4 of this event. The limit quantities of residual quantities of the received data delay absorption buffers 11, 21 and 31 as described above are values calculated in terms of time and these values can vary according to applications being currently performed by user terminals 1 to 3. In this embodiment, the limit quantity notifying unit 51 is located within the monitor and control apparatus 5 but the limit quantity notifying unit 51 may be located so as to be directly connected to the IP network 101 or the IP network 102.

According to the above-mentioned configuration, even in case that when performing a real-time application variable over time as described above, the residual quantity of received data of a user terminal connected to a conventional IP network is reduced and in performing application it has judged that the real-time operation of the application cannot be kept, a data transmission rate regulating system of the present invention makes it possible to realize the real-time operation of application by enabling not only a user terminal itself to solve a problem but also other user terminals to aid in its own data transmission load.

Thanks to this, a data transmission rate regulating system of the present invention can ensure data reception of a particular user terminal even if the transmission rate of application data of the user terminal is temporarily increased.

Even when plural user terminals have reported a bearer having the average rate at the beginning of a call or session, this also makes it possible to provide a data stream having a transmission rate temporarily exceeding the reported rate and there is the possibility that a statistical multiple effect can be obtained in data transmission to a plurality of user terminals in case that transmission rates of data transmitted to individual user terminals are independent of one another.

As described above, in a system in which a plurality of user terminals and a monitor and control apparatus are connected to each other through a communication network, the present invention provides an effect that even when the transmission rate of application data of a particular user is temporarily increased in a real-time application being variable over time, it is possible to ensure the data reception of the user by making a monitor and control apparatus recognize the accumulated quantity of received data of a user terminal and control the reception rate of received data of the user terminal on the basis of information obtained by the recognition.

While this invention has been described in connection with certain preferred embodiments, it is to be understood that the subject matter encompassed by way of this invention is not to be limited to those specific embodiments. On the contrary, it is intended for the subject matter of the invention to include all alternative, modification and equivalents as can be included within the spirit and scope of the following claims.

## Claims

1. A data transmission rate regulating system for regulating a data transmission rate to a plurality of user terminals connected to a communication network, comprising:
a quantity monitor for recognizing the accumulated quantity of received data of said user terminal, and
a rate controller for controlling the reception rate of receiving data of said user terminal on the basis of information obtained by the quantity monitor.

2. A data transmission rate regulating system according to claim 1, wherein:
each of said plurality of user terminals comprises a received data delay absorption buffer for accumulating received data over a certain period of time, a accumulated quantity detector for grasping the current accumulating quantity of received data in the received data delay absorption buffer, and a reception rate regulator for regulating the reception rate of receiving data.

3. A data transmission rate regulating system according to claim 1, wherein:
when the residual quantity in said delay absorption buffer has become less than a predetermined quantity, said user terminal notifies said quantity monitor of this fact, and
said rate controller judges whether or not each of residual quantity for accumulating received data of user terminals other than said user terminal is larger than a predetermined value when it receives the notification from said user terminal, and instructs a user terminal in which said residual quantity has been judged to be larger than the predetermined value to reduce the reception rate of at least said received data, and instructs the user terminal which has transmitted said notification to increase the reception rate of said received data.

4. A data transmission rate regulating system according to claim 1, wherein:
when the residual quantity in said delay absorption buffer is expected to become less than a predetermined quantity, said user terminal notifies said quantity monitor of this fact, and
said rate controller judges whether or not each of residual quantity for accumulating received data of user terminals other than said user terminal is larger than a predetermined value when it receives the notification from said user terminal, and instructs a user terminal in which said residual quantity has been judged to be larger than the predetermined value to reduce the reception rate of at least said received data, and instructs the user terminal which has transmitted said notification to increase the reception rate of said received data.

5. A data transmission rate regulating system according to claim 1, wherein:
said system further comprises a unit for notifying said user terminal of the limit quantity information of a residual quantity of said delay absorption buffer, and
said user terminal compares said limit quantity included in said notified information with the residual quantity of said delay absorption buffer and, when the residual quantity of said delay absorption buffer has become less than said limit quantity, notifies said quantity monitor of this fact.

6. A data transmission rate regulating system according to claim 5, wherein:
said limit quantity of a residual quantity of said delay absorption buffer is a value calculated in terms of time.

7. A data transmission rate regulating system according to claim 3, wherein:
said rate controller additionally indicates time intervals at which the reception rate of received data is reduced when reducing the reception rate of at least said received data to a user terminal in which said residual quantity has been judged to be larger than a predetermined value.

8. A monitor and control apparatus of data transmission rate for regulating the data transmission rate to a plurality of user terminals connected to a communication network, comprising:
a quantity monitor for recognizing the accumulated quantity of received data of said user terminal, and
a rate controller for controlling the reception rate of said received data of said user terminal on the basis of information obtained by said quantity monitor.

9. A data transmission rate regulating method for regulating the data transmission rate to a plurality of user terminals connected to a communication network, comprising steps of:
recognizing the accumulated quantity of said received data of said user terminal, and
controlling the reception rate of said received data of said user terminal on the basis of information obtained by the recognition.

10. A data transmission rate regulating method according to claim 9, wherein:
said recognizing step receives residual quantity reduction information notified from said user terminal when the residual quantity in a delay absorption buffer capable of accumulating received data over a certain period of time in said user terminal has become less than a predetermined quantity, and
said controlling step judges whether or not each of residual quantity for the accumulated quantities of received data of user terminals other than said user terminal is larger than a predetermined value when receiving the residual quantity reduction information from said user terminal, instructs a user terminal in which said residual quantity is judged to be larger than a predetermined value to reduce the reception rate of at least said received data, and instructs said user terminal which has transmitted said notification to increase the reception rate of said received data.

11. A data transmission rate regulating method according to claim 9, wherein:
said recognizing step receives residual quantity reduction information notified from said user terminal when the residual quantity in a delay absorption buffer capable of accumulating received data over a certain period of time in said user terminal has become less than a predetermined quantity, and
said controlling step judges whether or not each of residual quantity for the accumulated quantities of received data of user terminals other than said user terminal is larger than the predetermined value when receiving the residual quantity reduction information from said user terminal, instructs a user terminal in which said residual quantity is judged to be larger than a predetermined value to reduce the reception rate of at least said received data, and instructs said user terminal which has transmitted said notification to increase the reception rate of said received data.

12. A data transmission rate regulating method according to claim 9, wherein:
said method notifies said user terminal of the limit quantity information of a residual quantity of said delay absorption buffer, and
said user terminal compares said limit quantity included in said notified information with the residual quantity of said delay absorption buffer and, when the residual quantity of said delay absorption buffer has become less than said limit quantity, notifies said quantity monitor of this fact.

13. A data transmission rate regulating method according to claim 12, wherein:
said limit quantity of a residual quantity of said delay absorption buffer is a value calculated in terms of time.

14. A data transmission rate regulating method according to claim 10, wherein:
said controlling step additionally indicates time intervals at which the reception rate is reduced when reducing the reception rate of at least said received data to a user terminal in which said residual quantity has been judged to be larger than a predetermined value.
